# EUROPÄISCHE PATENTANMELDUNG

(11) **EP 1 450 234 A2**
(43) Veröffentlichungstag der Anmeldung: **25.08.2004**
(21) Anmeldenummer: 04002950.6
(22) Anmeldetag: 10.02.2004
(51) Int. Cl.: G06F 1/00

(54) **Vorrichtung und Verfahren zum Ermitteln einer Unregelmässigkeit in einem Ablauf eines Nutzprogramms**

(30) Priorität: 24.02.2003 DE 10307797
(71) Anmelder: Infineon Technologies AG, 81669 München (DE)
(72) Erfinder: Sedlak, Holger, 82054 Sauerlach (DE)
(74) Vertreter: Schoppe, Fritz, Dipl.-Ing.

(57) **Zusammenfassung**

Eine Vorrichtung zum Ermitteln einer Unregelmäßigkeit in einem Ablauf eines Nutzprogramms auf einer Pipelineeinrichtung (10) mit einer Mehrzahl von hintereinander geschalteten Pipelinestufen (10a, 10b, 10c, 10c) umfasst eine Pipelinebelegungseinrichtung (12) zum Belegen der Pipelineeinrichtung mit mindestens einem Nutzprogramm und mindestens einem Kontrollprogramm, so dass zu einem Zeitpunkt in einer Pipelinestufe ein Befehl des Nutzprogramms und in einer anderen Pipelinestufe ein Befehl des Kontrollprogramms verarbeitet wird, eine Kontrollprogrammuntersuchungseinrichtung (18) zum Untersuchen, ob das Kontrollprogramm ein vorbestimmtes Verhalten hat, und eine Problemfeststellungseinrichtung (20) zum Signalisieren einer Unregelmäßigkeit in dem Nutzprogramm, wenn ein Verfahren des Kontrollprogramms von dem vorbestimmten Verhalten abweicht. Somit wird mit skalierbarer Sicherheit und skalierbaren Aufwand eine Attacke auf sicherheitskritische Nutzprogramme erkannt.

## Beschreibung

Die vorliegende Erfindung bezieht sich auf Prozessoren und insbesondere auf die Ermittlung einer Unregelmäßigkeit in einem Ablauf eines Nutzprogramms auf einer Pipelineeinrichtung mit einer Mehrzahl von hintereinander geschalteten Pipelinestufen.

Moderne Rechnerarchitekturen setzen immer mehr auf die Pipelinearchitektur, also auf die Abarbeitung von Programmen mittels einer Mehrzahl von hintereinander geschalteten Pipelinestufen, wobei jede Pipelinestufe für einen Teil eines Befehls verantwortlich ist. Eine Pipelinestufe führt somit eine Handlung durch, wobei sich eine Befehl aus mehreren solchen Handlungen zusammensetzt. Pipeline-Stufen existieren in vielerlei Ausführung.

Eine einfache 4-Stufen-Pipelinearchitektur umfasst eine Fetch-Stufe, eine Decode-Stufe, eine Execute-Stufe und eine Write-Back-Stufe. Die Handlungen sind als Fetch, Decode, Execute und Write-Back. In dieser einfachen 4-Stufen-Pipeline führt die erste Stufe einen Befehlsabruf durch. Die zweite Stufe führt dann eine Befehls-Decodierung des abgerufenen Befehls durch. Die dritte Stufe führt den Befehl dann aus, und die vierte Stufe schreibt das Ergebnis des Befehls in ein Register, das Teil einer Pipeline-Peripherie ist, die ausgebildet ist, um die gesamte Datenverarbeitung in den Pipeline-Stufen zu steuern, und die Ergebniswerte entgegen zu nehmen.

Es sei darauf hingewiesen, dass die gegebene Anzahl von vier Pipeline-Stufen lediglich beispielhaft ist und dargestellt worden ist, um anhand eines einfachen Beispiels das Pipeline-Konzept darzulegen. Moderne Prozessoren, wie beispielsweise der Intel-Pentium-Prozessor umfassen je nach Ausführung zwischen 13 und 17 Pipeline-Stufen.

Pipeline-Architekturen haben den Vorteil, dass während des Befehlsabrufs beispielsweise eines neuen Befehls der vorherige Befehl gerade decodiert werden kann, der diesem Befehl vorausgehende Befehl gerade ausgeführt wird, und der dem ausgeführten Befehl vorhergehende Befehl gerade im Write-Back-Stadium ist. Dies bedeutet, dass in einer vierstufigen Pipeline vier aufeinanderfolgende Befehle eines Programms gewissermaßen gleichzeitig verarbeitet werden können. Damit kann ein hoher Durchsatz erreicht werden.

Problematisch wird dies jedoch dann, wenn ein Sprungbefehl auftritt bzw. wenn ein Befehl von einem Ergebnis eines gerade in der Pipeline-befindlichen Befehles, der noch nicht abgearbeitet ist, abhängt. In diesem Fall muss in die Pipeline eingegriffen werden, dahingehend, dass sie z. B. angehalten wird, was auch als "Stalling" bezeichnet wird.

Alternativ oder zusätzlich wird es bevorzugt, um die Komplexität von Stall-Schaltungen zu reduzieren bzw. ganz auf solche Stall-Schaltungen zu verzichten, dass der Pipeline-Prozessor im Multi-Threading-Betrieb betrieben wird. In diesem Fall sind zu einem bestimmten Zeitpunkt nicht vier Befehle desselben Programms in der Pipeline im Ausführungszustand, sondern befinden sich am Beispiel einer 4-Stufen-Pipeline die Befehle von vier voneinander unabhängigen Programmen, die auch als Threads bezeichnet werden, in der Pipeline.

Threads sind autonome Programme bzw. Programmabschnitte, die unabhängig von anderen Programmabschnitten ausgeführt werden. Muss ein Datenaustausch zwischen solchen Programmen stattfinden, so wird hierfür ein externes Messaging-System verwendet, wie es in der Technik bekannt ist. Nachdem sich in einer Pipeline im Multi-Threading-Betrieb immer nur voneinander unabhängige Befehle von weitgehend voneinander unabhängigen Programmen oder Threads befinden, ist eine Stall-Situation dahingehend ausgeschlossen, da kein Befehl in der Pipeline von einem anderen Befehl in der Pipeline abhängen kann.

Multi-Threading-fähige Prozessoren und insbesondere auch Programme, die für einen Multi-Threading-Betrieb geschrieben sind, sind gerade dabei, sich immer mehr durchzusetzen. Beispiele für solche Programme sind z. B. eine Eingabe/Ausgabe-Steuerung eines Programms, eine autonome Unterroutine eines Programms oder irgend ein anderes Teilprogramm, das bis zu einem gewissen Grad autonom von anderen Programmfäden oder Programm-Threads arbeiten kann.

Insbesondere für kryptographische Anwendungen bzw. allgemein für Anwendungen, bei denen sicherheitskritische Berechnungen und Handlungen bewirkt werden, ist es wichtig, einen unerlaubten Zugriff auf sensible Daten/Handlungen zu unterbinden. Dies wird nachfolgend anhand einer Geldkarte dargestellt. Eine Geldkarte umfasst einen Chip, in dem ein Geldbetrag abgespeichert ist. Der Chip umfasst ferner eine Authentifizierungseinrichtung, die eine von einem Benutzer einzugebende Identifikationsnummer (Pin) überprüft und mit auf dem Chip gespeicherten Daten gegencheckt, um nur dem Benutzer der Geldkarte einen Zugriff auf den in der Geldkarte abgespeicherten Geldbetrag zu ermöglichen, dem die Geldkarte auch tatsächlich gehört. Eine solche Geldkarte bietet einem Angreifer vielfältige Angriffsmöglichkeiten. Der Angreifer könnte beispielsweise daran interessiert sein, die Pin herauszubekommen. Dies würde es ihm ermöglichen, den auf der Geldkarte gespeicherten Betrag nach Belieben auszugeben. Ein weiteres Angriffsziel könnte sein, den Mechanismus der Speicherung des Geldbetrags zu knacken, um beispielsweise den Geldbetrag nach Belieben einstellen zu können.

Während die beschriebenen Angriffe komplexerer Natur sind, ist die "alt bewährte" Brute-Force-Attacke nach wie vor aktuell. Diese Attacke besteht darin, dass ein Angreifer einfach sämtliche Pin-Möglichkeiten ausprobiert, und dies so lange tut, bis er erfolgreich ist.

Übliche Abwehrmaßnahmen gegen solche Brute-Force-Attacken bestehen darin, dass ein Terminal es einem nur erlaubt, dreimal eine Pin einzugeben, wenn beispielsweise an ec-Karten-Terminals gedacht wird. Die Information, wie oft eine falsche Pin eingegeben worden ist, wird auf der Karte abgespeichert, indem ein hierfür vorgesehener Wert bei jedem Fehlversuch inkrementiert wird. Dies stellt sicher, dass ein Angreifer auch wenn er den Terminal wechselt, dennoch keine weiteren Versuche bekommt. Um eine Brute-Force-Attacke zu ermöglichen, wäre einem Angreifer auch schon dadurch gedient, dass er den Mechanismus stört, bzw. deaktiviert, durch den bei jedem Fehlversuch ein Wert inkrementiert werden sollte. Gelingt ihm dies, so kann er an einem einzigen Terminal beliebig viele Versuche durchführen.

Moderne Kryptoattacken sind unter dem Namen SPA, DPA, DFA etc. bekannt. SPA steht für Simple Power Analysis und besteht darin, ein Leistungs/Strom/Strahlungsprofil einer Karte zu untersuchen, um hierauf Rückschlüsse auf sensible Informationen zu schaffen. DPA steht für Differential Power Analysis und ist eine verbesserte Form der SPA, die darauf aufbaut, ein abweichendes Verhalten einer Schaltung abhängig von verschiedenen zu bearbeitenden Daten zu analysieren, um wiederum Rückschlüsse auf sensible Informationen zu bekommen.

DFA steht für Differential Fault Analysis. Die DFA besteht darin, eine Schaltung, die eine kryptographische Berechnung durchführt, extern zu stören, beispielsweise durch Strom/Spannungs-Spitzen, durch Ausüben einer mechanischen Belastung auf den Chip oder durch Einstrahlung von Lichtenergie mit einem z. B. Laserstrahl auf bestimmte selektiv auswählbare Stellen des Chips etc. So wurde herausgefunden, dass der geheime Schlüssel in einem RSA-Kryptosystem bereits geknackt werden kann, wenn das Kryptosystem auf der Basis des Chinesischen Restsatzes (CRT) arbeitet und einen einzigen durch eine Fehlerattacke bewirkten fehlerhaften Wert ausgibt.

Als Gegenmaßnahmen gegen solche Fehlerattacken wurde vorgeschlagen, eine entsprechende Berechnung zweimal durchzuführen und vor einer Ausgabe eines Ergebnisses die durch die zweimalige Berechnung erhaltenen beiden Ergebnisse zu vergleichen. Wird eine Nicht-Übereinstimmung der beiden Ergebnisse festgestellt, so deutet dies darauf hin, dass eine Berechnung fehlerhaft ist, und dass wahrscheinlich ein Angreifer am Werk war. In diesem Fall werden dann Abwehrmaßnahmen getroffen, die beispielsweise darin bestehen, dass jede Ausgabe unterbrochen wird, dass eine Interrupt-Routine aktiviert wird, oder dass eine entsprechende Mitteilung an ein Betriebssystem stattfindet, das seinerseits entsprechende Maßnahmen einleiten kann. An dieser Stelle sei darauf hingewiesen, dass die Abwehrmaßnahmen dann, wenn eine Fehlerattacke aufgedeckt worden ist, vielfältiger Natur sind.

Nachteilig an dem beschriebenen Konzept ist jedoch, dass auch eine gewisse Wahrscheinlichkeit dafür besteht, dass, wenn zwei parallele Schaltungen die gleiche Berechnung durchführen, die beiden Schaltungen bei einem Angriff denselben Fehler zeigen. In diesem Fall würde der Vergleich der Ergebnisse nicht zu einer Aufdeckung des Fehlerangriffs führen. Auch wenn dieselbe Schaltung zeitlich hintereinander dieselbe Berechnung durchführt, das erste Ergebnis gespeichert wird und dann, wenn das zweite Ergebnis vorliegt, mit dem ersten Ergebnis verglichen wird, existiert dennoch eine Sicherheitslücke dahingehend, dass eine Fehlerattacke zeitlich andauernd ausgeübt wird, so dass wieder dieselben Fehler bewirkt werden und durch Vergleich der Ergebnisse die Fehlerattacke wieder nicht aufgedeckt wird.

Außerdem ist das'beschriebene Konzept dahingehend nachteilhaft, dass es sehr aufwendig ist. Im ersteren Fall müssen zwei komplette Schaltungen aufgebaut werden, obgleich das Ergebnis der einen Schaltung immer nur der Überprüfung des Ergebnisses der anderen Schaltung dient. Die zweite Variante, also die serielle Berechnung derselben Operation in einer Schaltung ist dahingehend nachteilhaft, dass die Ausführungszeit inhärent verdoppelt wird, bzw. dass der Durchsatz halbiert wird. Beide Nachteile sind insbesondere oft für Chipkarten problematisch, da an Chipkarten sehr enge Chipflächenanforderungen gesetzt werden. Die für ein solches "Embedded System" zur Verfügung stehende Chipfläche muss äußeren Anforderungen genügen, und muss zumindest einen beträchtlichen Anteil an Speicher unterbringen, so dass für einen Prozessor selbst möglichst wenig Chipfläche eingesetzt werden soll. Dies führt unmittelbar dazu, dass die Rechenleistung einer Chipkarte nicht mit üblichen Rechenleistungen von für PCs und Workstations eingesetzten Prozessoren vergleichbar ist. Daher ist es besonders schmerzlich, wenn eine Chipkarte z. B. aufgrund einer Sicherung gegenüber Fehlerattacken nur wegen dieser Sicherung für kryptographische Berechnungen doppelt so lang braucht oder doppelt so viel Chipfläche benötigt.

Die Aufgabe der vorliegenden Erfindung besteht darin, ein effizientes und wirksames Konzept zum Ermitteln einer Unregelmäßigkeit in einem Ablauf eines Nutzprogramms zu schaffen.

Diese Aufgabe wird durch eine Vorrichtung zum Ermitteln einer Unregelmäßigkeit in einem Ablauf eines Nutzprogramms nach Patentanspruch 1, ein Verfahren zum Ermitteln einer Unregelmäßigkeit in einem Ablauf eines Nutzprogramms nach Patentanspruch 18 oder ein Computer-Programm nach Patentanspruch 19 gelöst.

Der vorliegenden Erfindung liegt die Erkenntnis zugrunde, dass für Pipeline-Architekturen, die eine Mehrzahl von hintereinander geschalteten Pipelinestufen haben, eine besonders effiziente und gleichzeitig in ihrer Wirksamkeit skalierbare und bei hohen Sicherheitsanforderungen sehr sichere Abwehrmaßnahme gegenüber Manipulationsversuchen darin besteht, dass eine Pipelinebelegungseinrichtung vorgesehen wird, die die Pipelineeinrichtung mit mindestens einem Nutzprogramm und mindestens einem Kontrollprogramm belegt, so dass zu einem Zeitpunkt in einer Pipelinestufe der Pipelineeinrichtung ein Befehl des Nutzprogramms und in einer anderen Pipelinestufe der Pipelineeinrichtung ein Befehl des Kontrollprogramms verarbeitet wird. Jegliche Angriffe auf die Pipelineeinrichtung z. B. durch Strom/Spannungs-Spitzen oder mechanische Belastungen führt unmittelbar dazu, dass auch das Kontrollprogramm, das in derselben Pipelineeinrichtung gerade zusammen mit dem Nutzprogramm sitzt, beeinträchtigt wird. Eine solche Beeinträchtigung wird eine Kontrollprogrammuntersuchungseinrichtung feststellen, indem sie untersucht, ob das Kontrollprogramm ein vorbestimmtes Verhalten hat oder nicht. Ein solches vorbestimmtes Verhalten ist beispielsweise ein von dem Kontrollprogramm erwartetes Ergebnis. Das Kontrollprogramm kann auf vielfältige Arten und Weisen ausgestaltet sein. Lediglich als illustratives Beispiel führt das Kontrollprogramm z. B. ständig eine Kombination zweier bekannter Werte oder auch z. B. nur eine logische Operation mit einem einzigen bekannten Wert durch, und meldet sein Ergebnis der Kontrollprogrammuntersuchungseinrichtung, die dann ein aktuell von dem Kontrollprogramm berechnetes Ergebnis mit dem erwarteten Ergebnis vergleicht.

Zur Auswertung der Kontrollprogrammuntersuchung ist ferner eine Problemfeststellungseinrichtung vorgesehen, die eine Unregelmäßigkeit in dem Nutzprogramm signalisiert, wenn ein Verhalten des Kontrollprogramms von dem vorbestimmten Verhalten abweicht, also wenn beim oben genannten Beispiel das Ergebnis des Kontrollprogramms nicht den erwarteten Wert hatte.

Typischerweise wird das Nutzprogramm länger als das Kontrollprogramm sein, da das Kontrollprogramm völlig unabhängig von dem Nutzprogramm ausgestaltet werden kann. Ein Ablauf eines Nutzprogramms, wie beispielsweise eine modulare Multiplikation oder sogar eine modulare Exponentiation unter Verwendung vieler modularer Multiplikationen benötigt eine derart große Anzahl von Zyklen, dass in dieser Zeit das Kontrollprogramm, das ja sehr kurz sein kann, sehr oft ausgeführt worden ist. In diesem Fall ist die Kontrollprogrammuntersuchungseinrichtung ausgebildet, um ein Protokollbit zu setzen, wenn es ein Verhalten des Kontrollprogramm festgestellt hat, das von dem vorbestimmten Verhalten abweicht.

Zu einem bestimmen Zeitpunkt wird dann die Problemfeststellungseinrichtung aktiviert, um nunmehr auszuwerten, ob während der Ausführung des Nutzprogramms, das nunmehr etwas ausgeben möchte bzw. eine bestimmte Handlung vornehmen möchte, Unregelmäßigkeiten stattgefunden haben. Zu diesem Zweck untersucht die Problemfeststellungseinrichtung das Protokollbit und signalisiert dann eine Unregelmäßigkeit, wenn das Protokollbit beispielsweise gesetzt ist.

Das Kontrollprogramm dient somit nicht für eine Nutzberechnung sondern läuft gewissermaßen mit, um durch Angriffe auf den Prozessor genau so wie das Nutzprogramm einen Fehler zu erleiden, der durch die Kontrollprogrammuntersuchungseinrichtung festgestellt wird und schließlich von der Problemfeststellungseinrichtung ausgewertet wird. Das erfindungsgemäße Konzept stellt somit anhand des Kontrollprogramms fest, ob das Nutzprogramm regelmäßig oder unregelmäßig abgelaufen ist. Dies ist insbesondere dahingehend vorteilhaft, da im Hinblick auf die Gestaltung des Kontrollprogramms maximale Freiheit besteht, während dies für das Nutzprogramm selbstverständlich nicht der Fall sein wird, da das Nutzprogramm ein bestimmtes Kryptoprotokoll abzuarbeiten hat.

Die Verschränkung zwischen dem Kontrollprogramm und dem Nutzprogramm geschieht durch die Pipelineeinrichtung mit der Mehrzahl von hintereinander geschalteten Pipelinestufen dahingehend, dass ein Angriff auf die gesamte Pipelineeinrichtung zwar einen Fehler in einem Befehl des Nutzprogramms bewirkt, jedoch unweigerlich, da sich auch ein Befehl des Kontrollprogramms in der Pipeline befindet, auf die gerade ein Angriff ausgeübt wird, auch einen Fehler im Kontrollprogramm.

Der Angreifer wird immer darauf bedacht sein, nur das Nutzprogramm zu treffen, jedoch nicht das Kontrollprogramm. Hierzu ist ein Angriff auf die gesamte Pipelineeinrichtung an sich automatisch zum Scheitern verurteilt. Der Angreifer müsste daher Pipelinestufen selektiv angreifen können. Dieser selektive Angriff auf Pipelinestufen beispielsweise mit Lichtstrahlen ist bereits äußerst aufwendig, da der Angreifer auch in einem Chip die Pipelinestufen lokal identifizieren muss. Sollte eine Schaltung auch gegenüber solchen Angriffen abgesichert werden, so hat das erfindungsgemäße Konzept ein skalierbares Sicherheitspotential dahingehend, dass die Pipeline deterministisch oder, um eine noch höhere Sicherheit zu erreichen, Zufallszahlen-gesteuert mit mehr oder weniger Kontrollprogrammen belegt wird, um einen Ablauf eines Nutzprogramms anhand der Auswertung von einem oder mehreren Kontrollprogrammen zuverlässig zu überwachen bzw. um während der Ausführung des Nutzprogramms aufgetretene Unregelmäßigkeiten zu detektieren.

Das erfindungsgemäße Konzept ist insbesondere im Kontext eines Multi-Threading-fähigen Prozessors vorteilhaft, da keine Änderungen an der Software des Nutzprogramms, also an den Nutzprogramm-Threads nötig sind, sondern lediglich eine Pipelinebelegungseinrichtung, eine Kontrollprogrammuntersuchungseinrichtung und eine Problemfeststellungseinrichtung vorgesehen werden müssen, um eine Absicherung des Pipeline-Prozessors zu erreichen. Keine Intervention eines Programmierers ist erforderlich, da das Nutzprogramm völlig unbeeindruckt von dem Kontrollprogramm läuft. Daher müssen keine neuen Nutzprogramme geschrieben werden, und müssen insbesondere auch nicht, wie es bei kryptographischen Anwendungen üblich ist, extra zertifiziert werden, was kostenaufwendig, zeitaufwendig und insbesondere die Zeit vergrößert, bis ein Produkt auf den Markt gebracht werden kann.

Ein weiterer "Nebenaspekt" der Verwendung eines Kontrollprogramms in der Pipelineeinrichtung zusammen mit einem Nutzprogramm besteht darin, dass durch das Kontrollprogramm gewissermaßen automatisch und als "kostenlose Beigabe" auch das Stromprofil aufgrund der Verarbeitung des Nutzprogramms durch Überlagerung des Stromprofils aufgrund der Verarbeitung des Kontrollprogramms verschmiert und damit zumindest teilweise homogenisiert wird, so dass auch Strom/Leistungs/Strahlungs-Analysen zumindest erschwert wenn nicht unmöglich gemacht werden.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild eines bevorzugten Ausführungsbeispiels der vorliegenden Erfindung;
- Fig. 2: eine detaillierte Darstellung der Pipelinebelegungseinrichtung von Fig. 1;
- Fig. 3: eine Tabelle zur Darstellung verschiedener Modi zum Steuern der Schaltersteuerung von Fig. 2;
- Fig. 4a: eine Darstellung des zyklischen Modus;
- Fig. 4b: eine Darstellung des lückenhaften Modus;
- Fig. 4c: eine Darstellung des variierenden Modus;
- Fig. 4d: eine Darstellung des variablen Modus;
- Fig. 4e: eine Darstellung des redundanten Modus;
- Fig. 5: eine detailliertere Darstellung der Kontrollprogrammuntersuchungseinrichtung von Fig. 1; und
- Fig. 6: eine detailliertere Darstellung der Problemfeststellungseinrichtung von Fig. 1.

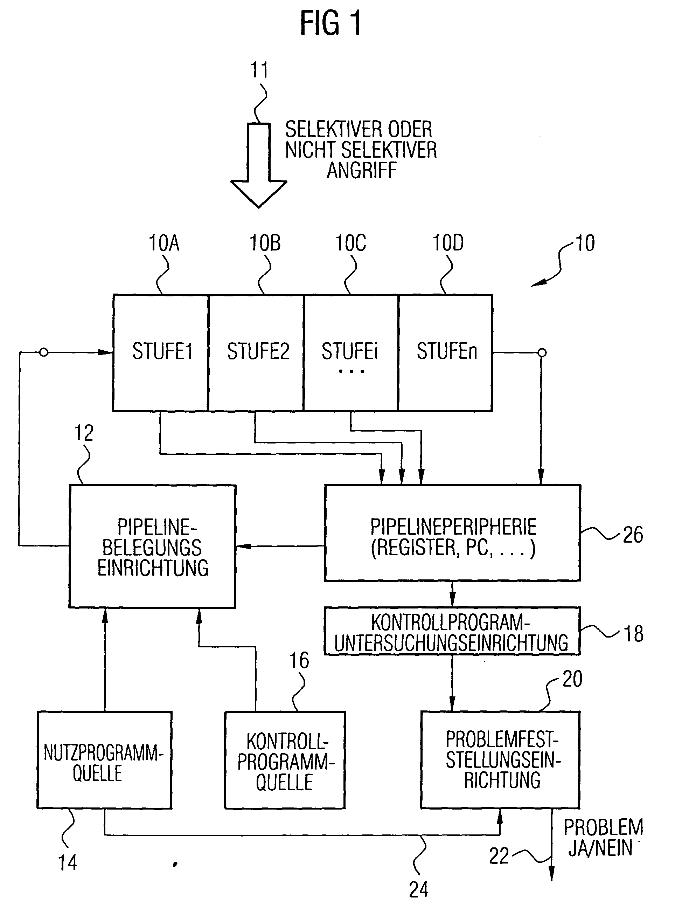

Fig. 1 zeigt eine Vorrichtung zum Ermitteln einer Unregelmäßigkeit in einem Ablauf eines Nutzprogramms bzw. eine Vorrichtung zum Überprüfen einer Integrität eines Ablaufs eines Nutzprogramms auf einer Pipelineeinrichtung 10, die eine Mehrzahl von hintereinander geschalteten Pipelinestufen 10a, 10b, 10c, 10d aufweist. Die Pipeline ist, wie es in Fig. 1 symbolisch dargestellt ist, einem selektiven oder nichtselektiven Angriff 11 durch eine beliebige Fehlerbeeinflussung ausgesetzt. Die in Fig. 1 gezeigte Vorrichtung umfasst ferner eine Pipelinebelegungseinrichtung 12, die ausgangsseitig mit einem Eingang der ersten Stufe 10a der n Stufen der Pipelineeinrichtung 10 gekoppelt ist. Die Pipelinebelegungseinrichtung ist insbesondere ausgebildet, um die Pipelineeinrichtung 10 und insbesondere die erste Stufe 10a der Pipelinebelegungseinrichtung mit mindestens einem Nutzprogramm aus einer Nutzprogrammquelle 14 und mindestens einem Kontrollprogramm aus einer Kontrollprogrammquelle 16 zu belegen, so dass zu einem Zeitpunkt in einer Pipelinestufe 10a bis 10d ein Befehl des Nutzprogramms verarbeitet wird, und dass gleichzeitig zu diesem Zeitpunkt in einer anderen Pipelinestufe 10a bis 10d ein Befehl des Kontrollprogramms verarbeitet wird.

Die in Fig. 1 gezeigte Vorrichtung umfasst ferner eine Kontrollprogrammuntersuchungseinrichtung 18 zum Untersuchen, ob das Kontrollprogramm, das von der Kontrollprogrammquelle 16 geliefert wird, ein vorbestimmtes Verhalten hat oder nicht. Der Kontrollprogrammuntersuchungseinrichtung 18 nachgeschaltet ist eine Problemfeststellungseinrichtung 20, die ausgebildet ist, um eine potentielle Unregelmäßigkeit in dem Nutzprogramm zu signalisieren, wenn ein Verhalten des Kontrollprogramms von dem vorbestimmten Verhalten abweicht, wie es die Kontrollprogrammuntersuchungseinrichtung 18 festgestellt hatte. An dieser Stelle sei darauf hingewiesen, dass eine Unregelmäßigkeit in dem Kontrollprogramm definitive festgestellt werden kann. Allerdings ist es noch nicht sicher, ob auch eine Unregelmäßigkeit in dem Nutzprogramm stattgefunden hat. Daher deutet eine Unregelmäßigkeit in dem Kontrollprogramm auf eine potentielle Unregelmäßigkeit in dem Nutzprogramm hin. Erfindungsgemäß wird jedoch bereits bei einer Unregelmäßigkeit in dem Kontrollprogramm ein Alarm ausgegeben, da das Nutzprogramm aufgrund der Verschränkung über die Pipeline, in der sich beide Programme befinden, mit hoher Wahrscheinlichkeit ebenfalls eine Unregelmäßigkeit hat, die jedoch direkt nicht unbedingt festgestellt werden muss.

Stellt die Problemfeststellungseinrichtung 20 einen Fehler fest, so gibt sie einen Problemindikator an einem Ausgang 22 aus, der anzeigt, ob ein Problem aufgetreten ist oder nicht. Vorzugsweise wird die Problemfeststellungseinrichtung durch ein Signal auf einer Aktivierungsleitung 24 aktiviert, um zu bestimmten Zeitpunkten eine Problemfeststellungsroutine durchzuführen. Ein solcher Zeitpunkt hängt vorzugsweise von dem Nutzprogramm ab, dessen integrer Ablauf verifiziert werden soll. Ein Zeitpunkt wäre beispielsweise ein Programmzustand, bei dem das Programm so weit fertig ist, um ein Ergebnis auszugeben. Um jedoch z. B. im Hinblick auf Fehlerattacken auf Nummer sicher zu gehen, könnte z. B. aus der Nutzprogrammquelle 14 ein Aktivierungssignal 24 an die Problemfeststellungseinrichtung 20 gesendet werden, das der Problemfeststellungseinrichtung 20 signalisiert, dass nunmehr eine Problemfeststellung durchzuführen ist, um beispielsweise dann in dem Fall, in dem über den Ausgang 22 ein Fehler signalisiert wird, eine Ausgabe zu unterbinden oder eine sonstige Abwehrmaßnahme durchzuführen. Diese Maßnahme hat den Vorteil, dass die Problemfeststellung nicht beispielsweise mit jedem Ablauf des Kontrollprogramms durchgeführt wird, sondern nur zu bestimmten Zeitpunkten, wobei zwischen diesen bestimmten Zeitpunkten typischerweise das Kontrollprogramm eine große Anzahl von Malen "durchgelaufen" ist. Damit wird der Problemfeststellungs-Overhead reduziert. Selbstverständlich könnte die Problemfeststellungseinrichtung jedoch auch ausgebildet sein, um nach jeder Vollendung des Kontrollprogramms ein Problem oder Nicht-Problem zu signalisieren.

Bei einem bevorzugten Ausführungsbeispiel ist die Größenordnung der Zyklen für ein Nutzprogramm jedoch bei beispielsweise 10000 Zyklen, bevor ein sensibles Ergebnis ausgegeben wird bzw. bevor ein neuer Geldbetrag in einer Geldkarte abgespeichert wird etc. Die Zykluszahl des Kontrollprogramms wird jedoch viel niedriger sein und kann je nach Komplexität des Kontrollprogramms beispielsweise zwischen einem Zyklus und 1000 Zyklen liegen. Eine Problemfeststellungsroutine nach jeder Beendigung des Kontrollprogramms wäre in diesem Fall unwirtschaftlich.

Wie es in Fig. 1 gezeigt ist, ist der Pipelineeinrichtung 10 ferner eine übliche Pipelineperipherie 26 zugeordnet, die Register, Programmzähler (PC), ... zur Steuerung/Handhabung der Pipelineeinrichtung 10 und der Ausgaben der Pipelineeinrichtung 10 haben wird.

Bei einem bevorzugten Ausführungsbeispiel befinden sich in der Pipelineeinrichtung 10 nicht immer dieselben Nutzprogramme/Kontrollprogramme und auch nicht immer in derselben Reihenfolge. Daher wird es bevorzugt, jeden Befehl, der in der Pipeline gerade verarbeitet wird, durch eine Marke zu identifizieren, wobei die Marke anzeigt, zu welchem Nutzprogramm bzw. zu welchem Kontrollprogramm dieser Befehl gehört. Auf der Basis dieser Marke kann dann jede Pipelinestufe 10a-10d bzw. kann die Nutzprogrammquelle oder die Pipelinebelegungseinrichtung arbeiten, um einen korrekten Ablauf der Befehle untereinander und insbesondere auch der Befehle der verschiedenen Programme zu gewährleisten.

Im Hinblick auf den Entwurf für ein Kontrollprogramm können beliebige Funktionalitäten in das Kontrollprogramm eingebaut werden. Ein ganz einfaches Kontrollprogramm würde darin bestehen, immer nur ein bestimmtes Bit zu invertieren. Komplexere Kontrollprogramme werden eine Addition oder sogar eine Multiplikation mit bekannten Eingangsgrößen haben, wobei von diesen Operationen die Ergebnisse bereits von vorneherein bekannt sind und die damit durch die Kontrollprogrammuntersuchungseinrichtung zur Untersuchung des Verhaltens des Kontrollprogramms verwendet werden können.

Insbesondere wird es bevorzugt, das Kontrollprogramm derart auszugestalten, dass es Funktionseinheiten eines Prozessors verwendet, die Ziel eines Angriffs sein könnten. Wird beispielsweise ein Angriff auf die Multipliziererlogik eines Rechenwerks befürchtet, so wird es bevorzugt, auch mittels des Kontrollprogramms die Multipliziererlogik zu beschäftigen, da dann ein Angriff auf die Multipliziererlogik auch eine Auswirkung auf das Kontrollprogramm haben wird. Allgemein wird es daher bevorzugt, das Kontrollprogramm derart auszugestalten, dass Funktionseinheiten eines Prozessors bzw. Funktionalitäten eines Prozessors durch das Kontrollprogramm benutzt werden, die auch durch das Nutzprogramm benutzt werden und die Ziel eines Angriffs sein können.

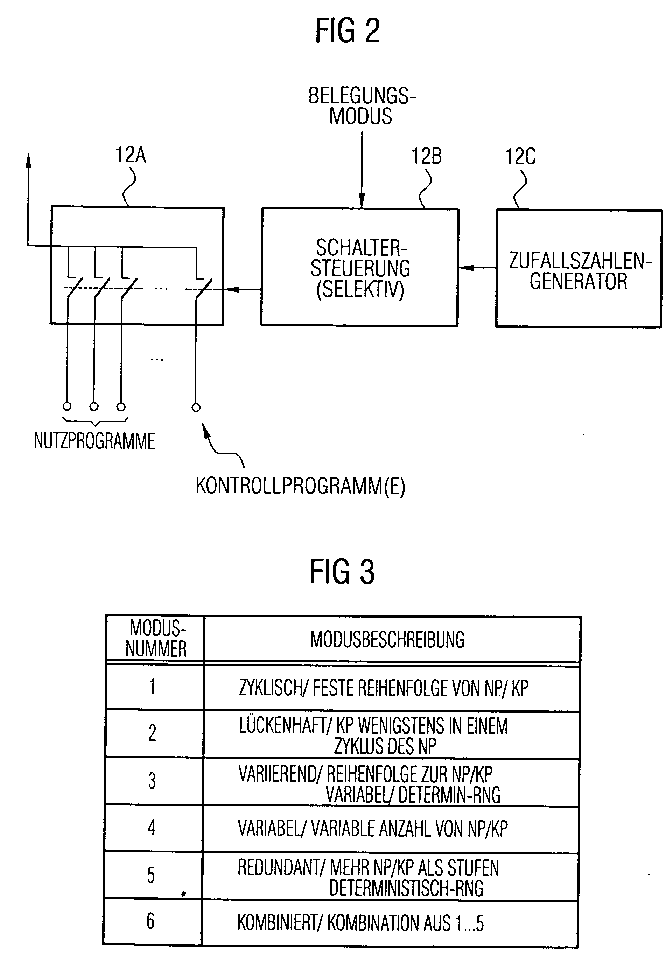

Fig. 2 zeigt eine beispielhafte Ausführung der Pipelinebelegungseinrichtung 12 von Fig. 1. Im einzelnen umfasst die Pipelinebelegungseinrichtung 12 bei dem in Fig. 2 gezeigten Beispiel eine Pipelineaufschaltungseinheit 12a, eine Schaltersteuerung 12b, die ausgebildet ist, um in der Aufschalteinheit 12a gezeigte Schalter selektiv zu betätigen, und einen Zufallszahlengenerator 12c. Die Schaltersteuerung 12b ist ausgebildet, um abhängig von einem Belegungsmodussignal die in der Aufschalteinrichtung 12a schematisch dargestellten Schalter in bestimmten Sequenzen zu steuern. Je nach Belegungsmodus wird in diese Schaltersteuerung eine Zufallszahl des Zufallszahlengenerators 12c mit einbezogen oder nicht. Eine Miteinbeziehung einer Zufallszahl in die Schaltersteuerung führt dazu, dass die Wahrscheinlichkeit eines erfolgreichen Angriffs, also eines Angriffs, der nicht auch eine Auswirkung auf ein Kontrollprogramm hatte, drastisch reduziert werden kann, selbst wenn selektive Angriffe auf einzelne Pipelinestufen möglich sind und durchgeführt werden, die andere Pipelinestufen nicht beeinträchtigen.

Verschiedene Belegungsmodi, wie sie der Schaltersteuerung 12b von Fig. 2 über den Belegungsmoduseingang signalisiert werden können, sind in Fig. 3 tabellarisch dargelegt. Die verschiedenen Belegungsmodi unterscheiden sich anhand des Aufwands und damit auch anhand der Sicherheit gegenüber speziellen Angriffen. Die in Fig. 3 gezeigten Belegungstabelle bringt daher die skalierbare Sicherheit zum Ausdruck, derart, dass mit Mehraufwand eine höhere Sicherheit geschaffen werden kann, während mit geringerem Aufwand eine wirtschaftlichere Absicherung, jedoch bei noch hohem Sicherheitsstandard erreicht werden kann.

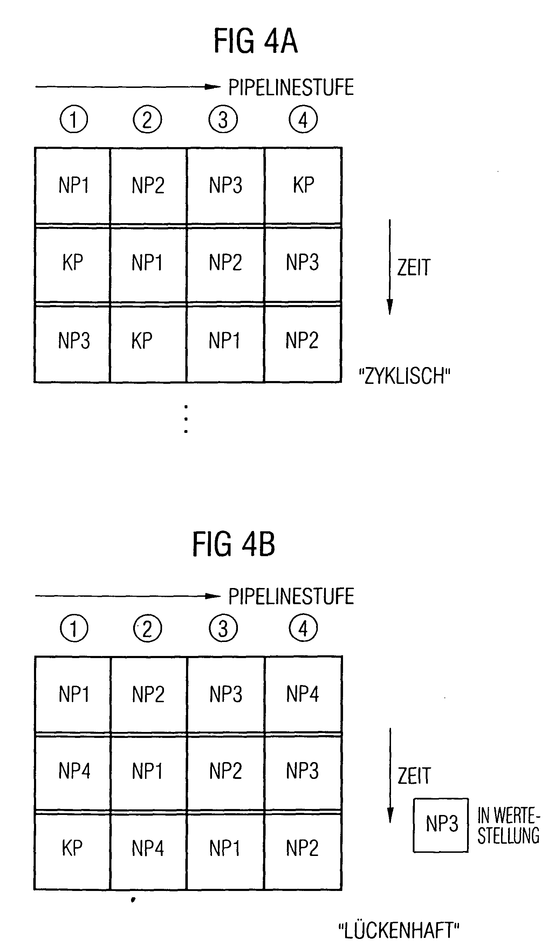

Nachfolgend wird Bezug nehmend auf Fig. 3 und die Fig. 4a bis 4e auf verschiedene Belegungsmodi eingegangen. Der erste Belegungsmodus, der in der in Fig. 3 gezeigten Tabelle unter der Modusnummer 1 bezeichnet ist, ist in Fig. 4a dargestellt. Wie in den Fig. 4a-4e ist beispielhaft die Belegung der Pipelinestufen 1, 2, 3 und 4 über der Zeit t dargestellt. Beispielhaft wird angenommen, dass zu einem ersten Zeitpunkt die Pipelinestufen mit drei Nutzprogrammen NP1, NP2, NP3 und einem Kontrollprogramm KP belegt sind. Zum nächsten Zeitpunkt wird ein neuer Befehl des Kontrollprogramms in Pipelinestufe 1 eingespeist, während die Befehle der Nutzprogramme NP1, NP2, NP3 jeweils eine Pipelinestufe weiter rücken. Zu einem nächsten Zeitpunkt wird dann ein neuer Befehl des Nutzprogramms 3 in die Pipelinestufe eingespeist, während die Befehle des Kontrollprogramms und der Nutzprogramme NP1 und NP2 jeweils um eine Stufe weitergerückt werden.

Dieser Belegungsmodus wird als zyklischer Belegungsmodus bezeichnet, da die Belegung der Pipelinestufen mit Befehlen des Kontrollprogramms KP und der Nutzprogramme NP1, NP2 und NP3 zyklisch vonstatten geht. Sollte es einem Angreifer gelingen, jeweils nur eine einzige Pipelinestufe z. B. mit einem selektiven Lichtangriff anzugreifen, und sollte es dem Angreifer gelingen, immer nur die Pipelinestufe anzugreifen, in der gerade kein Befehl des Kontrollprogramms KP verarbeitet wird, so könnte er eine unerkannte Manipulation in einem der Nutzprogramme NP1, NP2 und NP3 durchführen. Aufgrund der hohen Taktraten, also der kleinen Zeitunterschiede zwischen den in Fig. 4a gezeigten drei Zeitpunkten ist ein solcher Angriff jedoch bereits extrem schwierig.

Die zyklische Belegung schafft somit noch keine optimale Sicherheit, ist jedoch dahingehend vorteilhaft, dass kein Zufallszahlengenerator benötigt wird, und dass ferner die Nutzprogramme und das Kontrollprogramm nicht einmal markiert werden müssen, da die Reihenfolge der Programme untereinander zu jedem Zeitpunkt bekannt ist bzw. aufgrund der Reihenfolge der Belegung der Pipelinestufen aus dem vorherigen Zeitpunkt eruierbar ist.

In Fig. 4b ist der unter der Modusnummer 2 in Fig. 3 gekennzeichnete lückenhafte Modus gezeigt. Hier ist nicht zu jedem Zeitpunkt ein Befehl des Kontrollprogramms in der Pipelineeinrichtung, d. h. in einer Stufe der Pipelinestufen. Diese Situation ist in Fig. 4b dargestellt. So ist zum ersten Zeitpunkt in Fig. 4b lediglich eine Gruppe von Nutzprogrammen in der Pipelinestufe. Dies ist auch zum zweiten Zeitpunkt der Fall. Lediglich im dritten Zeitpunkt wird ein Befehl des Kontrollprogramms KP in eine Pipelinestufe eingespeist. Hierbei wird, da zum dritten Zeitpunkt, also in der letzten Zeile von Fig. 4b das Nutzprogramm NP3 nicht in der Pipelinestufe ist, der Zustand des Nutzprogramms in Wartestellung gehalten. Das in Fig. 4b gezeigte Konzept ist zur Abwehr von Angriffen geeignet, die eine relativ lange Auswirkung auf die Pipelineeinrichtung haben. Sicherheit wird dadurch erhalten, dass die Zeitdauer zur Abarbeitung eines Nutzprogramms sehr lange ist und daher mehrere Zeitpunkte umfasst, zu denen ein Kontrollprogrammbefehl in der Pipeline verarbeitet wird. Ein längerer Angriff wird daher dazu führen, dass irgendwann während des Angriffs ein Kontrollprogrammbefehl in die Pipeline eingespeist wird, und dieser Befehl durch den Angriff beeinträchtigt wird. Aus dem Vergleich der Fig. 4b und 4a ist jedoch zu sehen, dass das Sicherheitsniveau des lückenhaften Belegungsmodus niedriger ist als das Sicherheitsniveau des zyklischen Modus, dass jedoch ein höherer Nutzdatendurchsatz erreicht werden kann, also der Sicherheitsoverhead noch geringer ist als im Fall von Fig. 4a.

In Fig. 4c ist der in Fig. 3 mit "variierend" gezeigte Belegungsmodus dargestellt. Der variierende Belegungsmodus basiert darauf, dass die Reihenfolge zwischen einem Nutzprogrammbefehl und einem Kontrollprogrammbefehl in der Pipelineeinrichtung variieren kann, wobei diese Variation entweder deterministisch oder gesteuert von einem Zufallszahlengenerator (RNG; RNG = Random Number Generator) stattfinden kann. Diese Situation ist in Fig. 4c dahingehend gezeigt, dass zum ersten Zeitpunkt das Kontrollprogramm vor dem Nutzprogramm 3 angeordnet ist, während zum letzten Zeitpunkt in Fig. 4c das Kontrollprogramm dem Nutzprogramm 3 folgt. Ferner ist in Fig. 4c auch eine weitere Option dahingehend gezeigt, dass eine Pipelinestufe nicht beschäftigt sein kann, was zwar den Datendurchsatz verringert, jedoch zur weiteren Verwirrung eines Angreifers beitragen kann. Aus Fig. 4c ist ferner zu sehen, dass einmal das Kontrollprogramm und einmal das Nutzprogramm 2 in Wartestellung geschaltet werden. Ferner ist in dem dritten Zeitpunkt von Fig. 4c kein Kontrollprogrammbefehl in der Pipeline, es findet also ein gewissermaßen lückenhafter Belegungsmodus statt.

An dieser Stelle sei drauf hingewiesen, dass die Notation in den Figuren bezüglich der Wartestellung bedeutet, dass das in Wartestellung gezeichnete Programm beim Umschalten von einem Zeitpunkt zum nächsten Zeitpunkt aus der Pipeline heraus in Wartestellung kommt. In Fig. 4c z. B. geht das Kontrollprogramm KP nach dem in Fig. 4c durch die erste Zeile dargestellten Zeitpunkt in Wartestellung und bleibt dort, bis es im vierten Zeitpunkt wieder in die Pipeline hineingeladen wird.

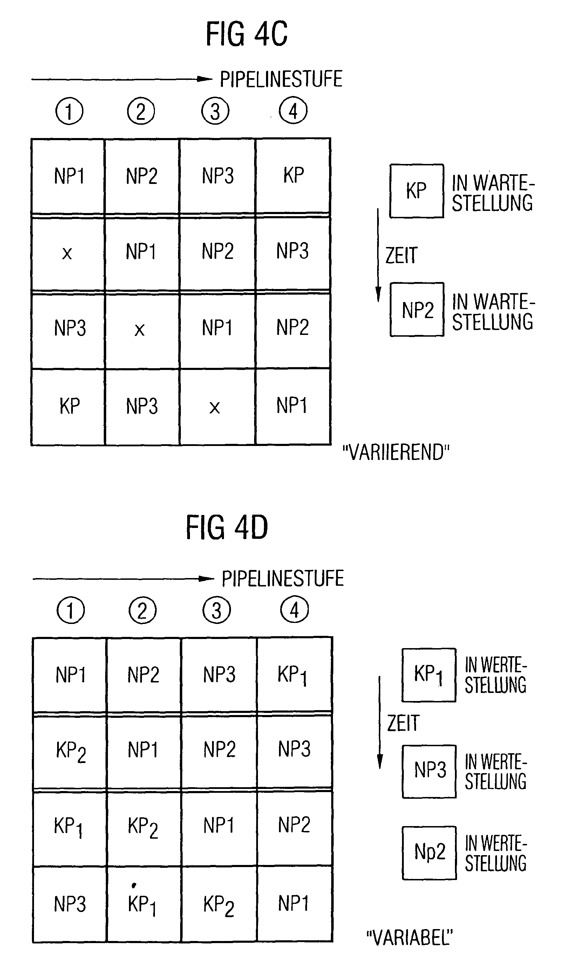

Fig. 4d zeigt einen in Fig. 3 mit der Modusnummer 4 bezeichneten Belegungsmodus, der als variabler Modus bezeichnet wird und dazu führt, dass in der Pipelineeinrichtung zu einem bestimmten Zeitpunkt eine variable Anzahl von Nutzprogrammen bzw. Kontrollprogrammen vorhanden ist. So ist aus Fig. 4d zu sehen, dass zu den beiden ersten Zeitpunkten immer nur ein Kontrollprogramm in der Pipeline ist, wobei im ersten Zeitpunkt dies das Kontrollprogramm KP1 ist, während im zweiten Zeitpunkt das Kontrollprogramm KP2 in der Pipeline ist. Im dritten und vierten Zeitpunkt befinden sich dann zwei Kontrollprogramme und nur noch zwei Nutzprogramme in der Pipeline. Welche Kontrollprogramme in die Pipeline eingestellt werden, und wie viele Kontrollprogramme und damit auch wie viele Nutzprogramme in die Pipeline eingestellt werden, kann wieder deterministisch oder auf der Basis eines Zufallszahlengenerators gesteuert werden. Aus Fig. 4d ist zu sehen, dass die Sicherheit gegenüber einem selektiven Angriff wesentlich höher ist als im zyklischen Modus von Fig. 4a, da keine regelmäßige Aussage mehr dahingehend möglich ist, zu welchem Zeitpunkt in welcher Stufe ein Nutzprogrammbefehl verarbeitet wird oder ein Kontrollprogrammbefehl verarbeitet wird. Diese Sicherheit ist dann besonders hoch, wenn eine Zufallszahlensteuerung verwendet wird.

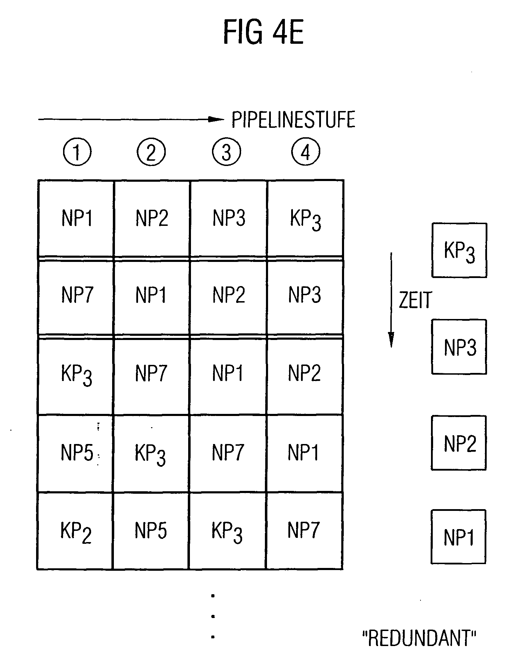

Fig. 4e zeigt den in der in Fig. 3 gezeigten Tabelle mit der Modusnummer 5 bezeichneten Belegungsmodus, der ein redundanter Modus ist, was bedeutet, dass mehr Nutzprogramme/Kontrollprogramme vorhanden sind als Stufen in der Pipelineeinrichtung 10 von Fig. 1 angeordnet sind. Die Steuerung, welches Nutzprogramm und welches Kontrollprogramm, und wie viele Nutzprogramme bzw. wie viele Kontrollprogramme zu einem Zeitpunkt in der Pipeline sind, kann wieder deterministisch oder, um noch eine höhere Sicherheit zu erreichen, auch Zufallszahlen-gesteuert stattfinden. Der in Fig. 4e gezeigte Belegungsmodus ist gewissermaßen eine Fortsetzung des in Fig. 4c gezeigten variablen Modus, da die in Fig. 4c mit einem "x" gezeigten Lücken, also nicht belegten Pipelinestufen in Fig. 4e belegt sind. Der redundante Modus ist ferner dahingehend vorteilhaft, dass die Ausführung von Programmen nicht auf die Anzahl von Pipelinestufen begrenzt ist, sondern dass mehr Programme ausgeführt werden, als Pipelinestufen vorhanden sind. Dies bezieht sich zum einen auf die Anzahl von Kontrollprogrammen und zum anderen auf die Anzahl von Nutzprogrammen.

Ferner wird durch den in Fig. 4e gezeigten redundanten Modus eine weitere Entkopplung der Nutzprogramme erreicht, dahingehend, dass insbesondere bei einer deterministischen Belegung des redundanten Modus auch Nutzprogramme verwendet werden können, die einen gewissen Grad an Abhängigkeit voneinander haben. Wenn zwischen zwei Nutzprogrammen eine bestimmte Abhängigkeit besteht, und wenn diese zwei Nutzprogramme, zwischen denen die Abhängigkeit besteht, zeitlich so weit als möglich beabstandet durch die Pipeline verarbeitet werden, so kann auch die Anzahl von möglicherweise auftretenden Stall-Ereignissen reduziert bzw. so klein als möglich gemacht werden. Dies erlaubt es, dass auch nicht vollständig voneinander unabhängige Programme oder "Threads" erfindungsgemäß abgesichert bearbeitet werden können.

An dieser Stelle sei darauf hingewiesen, dass jegliche Belegung der Pipeline bereits ohne Kontrollprogramm dann zu einer Verschmierung des Stromprofils führt, wenn zur Pipelinebelegung ein Zufallszahlengenerator eingesetzt wird. Sind alle vom Zufallszahlengenerator ausgewählten Nutzprogramme sicherheitskritische Programme, so wird ein Angreifer dennoch immer nur eine Überlagerung der Ausführung von mehreren sicherheitskritischen Programmen sehen können, wobei dieses verschmierte Stromprofil, das aus der Überlagerung mehrerer einzelner Stromprofile entsteht, durch ein Stromprofil eines Kontrollprogramms weiter hinsichtlich der extrahierbaren Informationen unkenntlich gemacht wird.

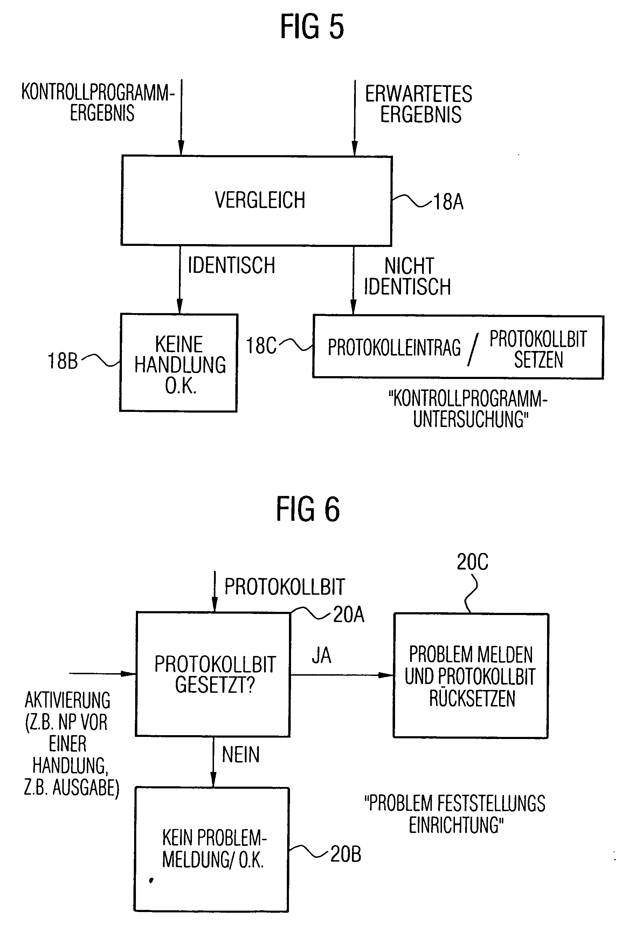

Fig. 5 zeigt eine detailliertere Ausgestaltung der Kontrollprogrammuntersuchungseinrichtung 18 von Fig. 1. Im einzelnen ist ein Komparator 18a angeordnet, der ein Kontrollprogrammergebnis bzw. Kontrollprogrammverhalten mit einem erwarteten Ergebnis bzw. erwarteten Verhalten vergleicht. Stellt der Vergleicher 18a eine Identität fest, so wird in einer Stufe 18b keine Handlung vorgenommen, oder es wird ein o.k. ausgegeben. Stellt der Vergleicher 18a dagegen Abweichungen fest, also eine nicht bestehende Identität zwischen einem erwarteten Verhalten und einem tatsächlichen Verhalten des Kontrollprogramms, so wird eine Protokolleintrag/Protokollbitsetzeinrichtung 18c aktiviert, um zu protokollieren, dass ein Kontrollprogramm nicht ausreichend gearbeitet hat, also möglicherweise einem Angriff zum Opfer gefallen ist. Diese Signalisierung kann entweder in einem Protokoll stattfinden, in dem die Anzahl von beeinträchtigten Kontrollprogrammen z. B. zusammen mit einem Zeitstempel signalisiert wird, um mehr über die Art des Angriffs herauszufinden. Wird dagegen lediglich ein Protokollbit gesetzt, so führt diese Information bereits dazu, zu sagen, ob eine Beeinträchtigung der Integrität stattgefunden hat oder nicht. Während eine tatsächliche Protokollierung über der Zeit aufwendiger ist, so kann sie doch helfen, einen Angriff nachzuvollziehen, sofern es möglich ist, nach einem erfolgten Angriff ein solches Angriffsprotokoll auszulesen.

Fig. 6 zeigt eine bevorzugte Ausführungsform der Problemfeststellungseinrichtung 20 in Fig. 1. Im einzelnen wird in einer Einrichtung 20a untersucht, ob ein Protokollbit gesetzt ist oder nicht. Die Aktivität der Einrichtung 20a wird durch ein Aktivierungssignal getriggert, das von einem Zustand des Nutzprogramms abhängt. Steht das Nutzprogramm beispielsweise vor einer Ausgabe oder einer Eintragung eines neuen Geldbetrags in einer Geldkarte etc. also einer speziellen Handlung, so wird es bevorzugt, vor dieser Handlung die Problemfeststellungseinrichtung zu aktivieren, um während der Ausführung des Nutzprogramms möglicherweise protokollierte fragwürdige Kontrollprogrammergebnisse abzufragen. Wird festgestellt, dass ein Protokollbit nicht gesetzt ist, so wird durch eine Einrichtung 20b ein o.k. ausgegeben oder nichts signalisiert. Wird dagegen festgestellt, dass das Protokollbit gesetzt ist, so wird eine Einrichtung 20c aktiviert, um ein Problem zu melden, wobei diese Meldung auf verschiedene Art und Weisen, wie sie eingangs erwähnt worden sind, berücksichtigt werden kann. Ferner ist die Einrichtung 20c vorzugsweise derart ausgebildet, dass das Protokollbit rückgesetzt wird, um ab dem durch den Zeitpunkt der Aktivierung begonnenen neuen Zeitraum einen neuen Protokollierungszyklus zu beginnen.

Abhängig von den Gegebenheiten kann das erfindungsgemäße Verfahren zum Ermitteln einer Unregelmäßigkeit in einem Ablauf eines Nutzprogramms auf einer Pipelineeinrichtung mit einer Mehrzahl von hintereinander geschalteten Pipelinestufen in Hardware oder in Software implementiert werden. Die Implementierung kann auf einem digitalen Speichermedium insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

### Bezugszeichenliste

- 10: Pipelineeinrichtung
- 10a: erste Stufe
- 10b: zweite Stufe
- 10c: dritte Stufe
- 10d: vierte Stufe
- 11: selektiver oder nicht-selektiver Angriff
- 12: Pipelinebelegungseinrichtung
- 12a: Aufschalteinrichtung
- 12b: Schaltersteuerung
- 12c: Zufallszahlengenerator
- 14: Nutzprogrammquelle
- 16: Kontrollprogrammquelle
- 18: Kontrollprogrammuntersuchungseinrichtung
- 18a: Vergleicher
- 18b: O.K. Ausgabe
- 18c: Protokolleintrageinrichtung
- 20: Problemfeststellungseinrichtung
- 20a: Protokollbituntersuchungseinrichtung
- 20b: O.K. Ausgabe
- 20c: Problemmeldungseinrichtung
- 22: Problemmeldungsausgabe
- 24: Aktivierungsleitung

## Patentansprüche

1. Vorrichtung zum Ermitteln einer Unregelmäßigkeit in einem Ablauf eines Nutzprogramms auf einer Pipelineeinrichtung (10) mit einer Mehrzahl von Pipelinestufen (10a, 10b, 10c, 10d), mit folgenden Merkmalen:
einer Pipelinebelegungseinrichtung (12) zum Belegen der Pipelineeinrichtung (10) mit mindestens einem Nutzprogramm und mindestens einem Kontrollprogramm, so dass zu einem Zeitpunkt in einer Pipelinestufe ein Befehl des Nutzprogramms und in einer anderen Pipelinestufe ein Befehl des Kontrollprogramms verarbeitet wird;
einer Kontrollprogrammuntersuchungseinrichtung (18) zum Untersuchen, ob das Kontrollprogramm ein vorbestimmtes Verhalten hat; und
einer Problemfeststellungseinrichtung (20) zum Signalisieren einer Unregelmäßigkeit in dem Nutzprogramm, wenn ein Verhalten des Kontrollprogramms von dem vorbestimmten Verhalten abweicht.

2. Vorrichtung nach Anspruch 1, bei der die Pipelinebelegungseinrichtung (12) ausgebildet ist, um so zu belegen, dass zu jedem Zeitpunkt, zu dem sich das Nutzprogramm in der Pipelineeinrichtung befindet, auch das Kontrollprogramm in der Pipelineeinrichtung ist.

3. Vorrichtung nach Anspruch 1 oder 2, bei der die Pipelineeinrichtung eine Pipelineperipherieeinrichtung (26) aufweist, die Multi-Threading-fähig ist, und
bei der das Nutzprogramm und das Kontrollprogramm Programm-Threads sind.

4. Vorrichtung nach einem der vorhergehenden Ansprüche, bei der das Kontrollprogramm ein von dem Nutzprogramm unabhängiges Programm ist.

5. Vorrichtung nach einem der vorhergehenden Ansprüche, bei der eine Anzahl von Befehlen des Kontrollprogramms kleiner ist als eine Anzahl von Befehlen des Nutzprogramms ist, so dass in einer Zeitdauer, die zum Ablauf des Nutzprogramms in der Pipelineeinrichtung (10) benötigt wird, das Kontrollprogramm N mal abläuft, wobei N größer oder gleich 2 ist.

6. Vorrichtung nach einem der vorhergehenden Ansprüche, bei der das Kontrollprogramm ausgebildet ist, um eine oder mehrere Funktionseinheiten eines Prozessors (10) zu aktivieren, um durch einen Angriff auf die einen oder die mehreren Funktionseinheiten so beeinträchtigt zu werden, dass das Verhalten des Kontrollprogramms von dem vorbestimmten Verhalten abweicht.

7. Vorrichtung nach einem der vorhergehenden Ansprüche,
bei der die Problemfeststellungseinrichtung (20) ausgebildet ist, um durch ein Aktivierungssignal (24) zu einem Zeitpunkt aktiviert zu werden, der von einem Ausführungsstand des Nutzprogramms abhängt.

8. Vorrichtung nach einem der vorhergehenden Ansprüche, bei der die Kontrollprogrammuntersuchungseinrichtung (18) ausgebildet ist, um ansprechend auf einen vollständigen Ablauf des Kontrollprogramms ein Ergebnis des Kontrollprogramms mit einem vorbestimmten Ergebnis zu vergleichen (18a).

9. Vorrichtung nach einem der vorhergehenden Ansprüche, bei der das Kontrollprogramm derart gestaltet ist, dass ein Ergebnis des Kontrollprogramms von vornherein bekannt ist.

10. Vorrichtung nach einem der vorhergehenden Ansprüche, bei der die Kontrollprogrammuntersuchungseinrichtung (18) ausgebildet ist, um in dem Fall, in dem das Kontrollprogramm ein Verhalten hat, das von dem vorbestimmten Verhalten abweicht, einen Protokollindikator zu aktivieren (18c), und um in dem anderen Fall den Protokollindikator nicht zu aktivieren (18b).

11. Vorrichtung nach Anspruch 10, bei der die Problemfeststellungseinrichtung (20) ausgebildet ist, um bei einer Signalisierung einer Unregelmäßigkeit den Protokollindikator zu deaktivieren (20c).

12. Vorrichtung nach einem der vorhergehenden Ansprüche, bei der die Belegungseinrichtung folgende Merkmale aufweist:
einen Zufallszahlengenerator (12c);
eine Steuerschaltung (12b) mit einem Belegungsmoduseingang; und
eine Programmaufschaltungseinheit (12a), die durch die Steuerschaltung steuerbar ist, wobei die Steuerschaltung ausgebildet ist, um abhängig von dem Zufallszahlengenerator (12c) und einem Belegungsmodus zu einem Zeitpunkt einen Nutzprogrammbefehl oder einen Kontrollprogrammbefehl in die Prozessoreinrichtung (10) einzuspeisen.

13. Vorrichtung nach einem der vorhergehenden Ansprüche,
bei der jedem Befehl eine Markierung zugeordnet ist, die signalisiert, zu welchem Nutzprogramm oder zum welchem Kontrollprogramm der Befehl gehört.

14. Vorrichtung nach Anspruch 13, die ferner eine Einrichtung zum Absichern der Markierung gegen eine Attacke aufweist.

15. Vorrichtung nach einem der vorhergehenden Ansprüche,
bei der die Belegungseinrichtung (12) ausgebildet ist, um aus einer Anzahl von Nutzprogrammen und aus einer Anzahl von Kontrollprogrammen ein Nutzprogramm oder ein Kontrollprogramm zur Einspeisung in die Pipelineeinrichtung auszuwählen, wobei die Anzahl von Nutzprogrammen zusammen mit der Anzahl von Kontrollprogrammen größer als die Mehrzahl von Pipelinestufen ist, und wobei eine Auswahl auf der Basis einer Zufallszahl von einem Zufallszahlengenerator durchführbar ist.

16. Vorrichtung nach einem der vorhergehenden Ansprüche, bei der die Pipelinestufen einen gemeinsamen Stromversorgungszugang haben, an dem sich ein Stromprofil aufgrund des zumindest einen Kontrollprogramms mit einem Stromprofil aufgrund des zumindest einen Nutzprogramms überlagern.

17. Vorrichtung nach einem der vorhergehenden Ansprüche, bei der die Pipelinestufen ein elektromagnetisches Abstrahlungsprofil haben, das eine Überlagerung einer elektromagnetischen Abstrahlung aufgrund des Nutzprogramms und einer elektromagnetischen Abstrahlung aufgrund des Kontrollprogramms ist.

18. Verfahren zum Ermitteln einer Unregelmäßigkeit in einem Ablauf eines Nutzprogramms auf einer Pipelineeinrichtung (10) mit einer Mehrzahl von Pipelinestufen (10a, 10b, 10c, 10d), mit folgenden Schritten:
Belegen (12) der Pipelineeinrichtung (10) mit mindestens einem Nutzprogramm und mindestens einem Kontrollprogramm, so dass zu einem Zeitpunkt in einer Pipelinestufe ein Befehl des Nutzprogramms und in einer anderen Pipelinestufe ein Befehl des Kontrollprogramms verarbeitet wird;
Untersuchen (18), ob das Kontrollprogramm ein vorbestimmtes Verhalten hat; und
Signalisieren (20) einer Unregelmäßigkeit in dem Nutzprogramm, wenn ein Verhalten des Kontrollprogramms von dem vorbestimmten Verhalten abweicht.

19. Computer-Programm mit einem Programmcode zur Durchführung des Verfahrens nach Anspruch 18, wenn das Programm auf einem Computer abläuft.
